# EUROPEAN PATENT APPLICATION

(11) **EP 4 629 385 A1**
(43) Date of publication of application: **08.10.2025**
(21) Application number: 23954039.6
(22) Date of filing: 14.12.2023
(51) Int. Cl.: H01M 10/0567, H01M 50/533, H01M 10/0569, H01M 10/0525, H01M 10/058, H01M 4/36

(54) **LITHIUM-ION BATTERY AND ELECTRIC DEVICE**

(30) Priority: 25.09.2023 CN 202311241916
(71) Applicant: ZHEJIANG LIWINON ENERGY TECHNOLOGY CO., LTD., Jinhua, Zhejiang 321113 (CN)
(72) Inventor: HONG, Zuchuan, Jinhua, Zhejiang 321113 (CN); YANG, Xinzhe, Jinhua, Zhejiang 321113 (CN); JIANG, Yanghui, Jinhua, Zhejiang 321113 (CN); ZHU, Yanhua, Jinhua, Zhejiang 321113 (CN); XIONG, Wei, Jinhua, Zhejiang 321113 (CN); MA, Bin, Jinhua, Zhejiang 321113 (CN); WU, Shengben, Jinhua, Zhejiang 321113 (CN); XIANG, Haibiao, Jinhua, Zhejiang 321113 (CN)
(74) Representative: Chung, Hoi Kan
(86) International application number: PCT/CN2023/138688
(87) International publication number: WO 2025/065907

(57) **Abstract**

Provided are a lithium-ion battery and an electric device. The lithium-ion battery comprises a shell, and a cell and an electrolyte that are arranged inside the shell. The cell comprises a positive electrode, a negative electrode, and a separator arranged between the positive electrode and the negative electrode. The positive electrode comprises a positive-electrode active layer, and the positive-electrode active layer comprises a positive-electrode active material with Dv90 of 9.5±1.5 µm. The electrolyte comprises an electrolyte additive, and the electrolyte additive comprises a tricarbonitrile compound and a tetracarbonitrile compound. Compared with prior art, the lithium-ion battery provided by this application combines a specially-designed positive-electrode active material and an electrolyte additive, which can simultaneously improve the high-rate discharge performance, low-temperature discharge performance, and high-temperature performance of the lithium-ion battery.

## Description

### TECHNICAL FIELD

The present disclosure relates to the field of lithium-ion batteries, and specifically to a lithium-ion battery and an electric device.

### BACKGROUND

A lithium-ion battery is primarily composed of a positive electrode, a negative electrode, a separator, an electrolyte, and an outer packaging. With the technical development, lithium-ion batteries not only need to have excellent high-temperature properties, but also need to meet increasing high-rate discharge and low-temperature discharge requirements. Particularly in high-rate discharge scenarios such as e-cigarettes, electric tools, and drones or ultra-high-rate discharge scenarios such as power supply start/stop and aeromodelling, lithium-ion batteries are expected to possess superior high-rate discharge and low-temperature discharge properties.

Currently, the common technical approach is to combine the conventional positive-electrode material with a high-kinetics and low-impedance electrolyte to improve the high-rate discharge and low-temperature discharge performance of a lithium-ion battery. However, due to limitations in the selection of positive-electrode materials and electrolytes, this technical approach enables a minimal improvement effect, which falls far short of meeting the high-rate discharge and low-temperature discharge requirements of special lithium-ion batteries. There are also some solutions in which specially-designed positive-electrode materials are used to produce lithium-ion batteries. However, due to the limited compatibility between materials, these solutions still cannot lead to desired improvements for high-rate discharge and low-temperature discharge properties of lithium-ion batteries. Conversely, these solutions may compromise properties such as high-temperature performance, thereby reducing the battery safety.

In view of this, it is necessary to provide a technical solution to solve the above problems.

### SUMMARY

A first objective of the present disclosure is to address the shortcomings of the prior art and provide a lithium-ion battery, so as to solve the problem that the high-rate discharge performance, low-temperature discharge performance, and high-temperature performance of a lithium-ion battery currently cannot be improved simultaneously due to poor compatibility between a positive-electrode material and an electrolyte.

To achieve the above objective, the present disclosure adopts the following technical solutions:
A lithium-ion battery comprises a shell, and a cell and an electrolyte that are arranged inside the shell, wherein
the cell comprises a positive electrode, a negative electrode, and a separator arranged between the positive electrode and the negative electrode; the positive electrode comprises a positive-electrode active layer, and the positive-electrode active layer comprises a positive-electrode active material with Dv90 of 9.5±1.5 µm; and
the electrolyte comprises an electrolyte additive, and the electrolyte additive comprises a tricarbonitrile compound and a tetracarbonitrile compound.

Preferably, a weight of the positive-electrode active material is a, a total weight of the tricarbonitrile compound and the tetracarbonitrile compound is b, and a and b satisfy the following relationship equation: 0.6% ≤ b/a ≤ 1.1%.

Preferably, a total mass percentage of the tricarbonitrile compound and the tetracarbonitrile compound in the electrolyte is 0.5% to 3.5%.

Preferably, the tricarbonitrile compound is at least one selected from the group consisting of 1,3,6-hexanetricarbonitrile (HTCN), 1,2,3-propanetricarbonitrile, 1,2,3-tris(2-cyanoethoxy)propane, 1,3,5-benzenetricarbonitrile, 1,3,5-cyclohexanetricarbonitrile, and 2,4,6-trifluorobenzene-1,3,5-tricarbonitrile.

Preferably, a mass percentage of the tricarbonitrile compound in the electrolyte is 0.01% to 3.00%.

Preferably, the tetracarbonitrile compound has at least one structural formula selected from the group consisting of the following structural formulas I to III: 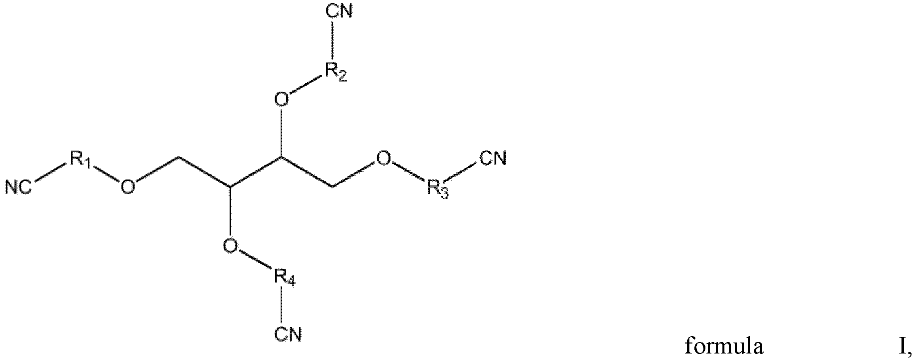 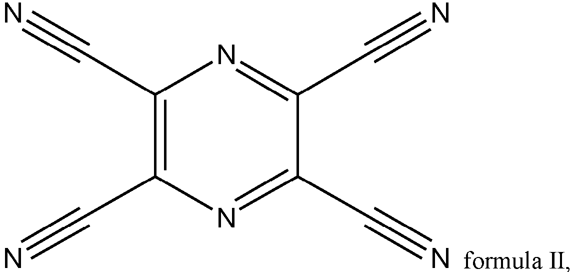 and 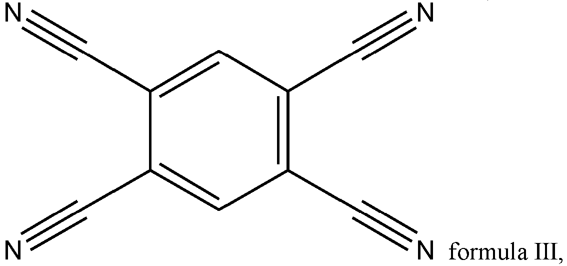 wherein R₁, R₂, R₃, and R₄ each are independently selected from the group consisting of alkyl groups with 1 to 4 carbon atoms.

Preferably, the structural formula I is at least one selected from the group consisting of the following structural formulas:

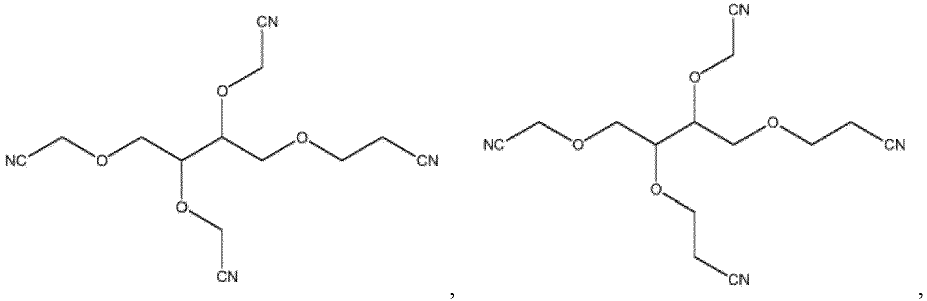

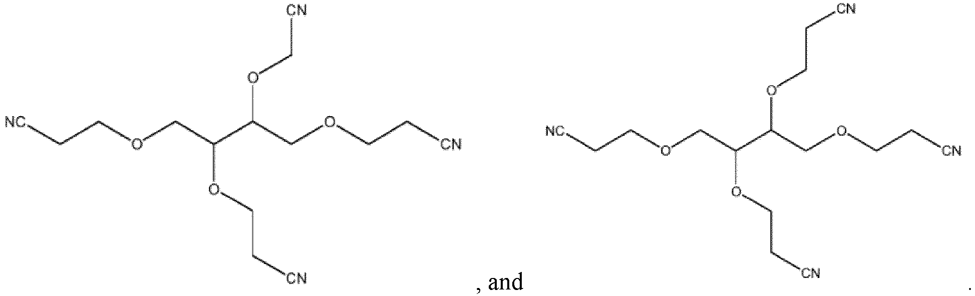

Preferably, a mass percentage of the tetracarbonitrile compound in the electrolyte is 0.01% to 2.00%.

Preferably, the electrolyte further comprises a lithium salt and an organic solvent; the lithium salt is at least one selected from the group consisting of lithium hexafluorophosphate, lithium difluorophosphate, lithium difluoro(bisoxalato)phosphate, lithium tetrafluoro(oxalato)phosphate, lithium oxalatophosphate, lithium bis(oxalato)borate, lithium difluoro(oxalato)borate (LiODFB), lithium tetrafluoroborate, and lithium bis(fluorosulfonyl)imide; a mass percentage of the lithium salt in the electrolyte is 0.01% to 20%; the organic solvent is at least one selected from the group consisting of ethylene carbonate (EC), propylene carbonate (PC), diethyl carbonate (DEC), ethyl methyl carbonate, ethyl propionate (EP), propyl propionate (PP), ethyl acetate, ethyl n-butyrate, γ-butyrolactone, dimethoxymethane, diethoxymethane, and propyl butyrate; a mass percentage of the organic solvent in the electrolyte is 50% to 90%; and the electrolyte additive further comprises at least one selected from the group consisting of fluoroethylene carbonate (FEC), vinylene carbonate, 1,3-propanesultone (PS), ethylene sulfate, methylene methanedisulfonate, propene sultone, citraconic anhydride, and LiODFB.

A second objective of the present disclosure is to provide an electric device comprising the lithium-ion battery described above.

Compared with the prior art, the present disclosure provides the following beneficial effects: The lithium-ion battery provided by the present disclosure combines a specially-designed positive-electrode active material and an electrolyte additive, which can simultaneously improve the high-rate discharge performance, low-temperature discharge performance, and high-temperature performance of the lithium-ion battery. Small-particle positive-electrode active materials have excellent rate performance and low-temperature performance, but also exhibit characteristics such as large specific surface area and high reactivity. Thus, the small-particle positive-electrode active material exhibits extremely poor stability at a high temperature, undergoes severe performance deterioration at a high temperature, and cannot meet the operating requirements of lithium-ion batteries. On this basis, the present disclosure incorporates an electrolyte additive comprising a tricarbonitrile compound and a tetracarbonitrile compound. The combined action of the tricarbonitrile compound and the tetracarbonitrile compound significantly enhances the complexing ability with a positive electrode, effectively improves the serious dissolution of transition metals at a high temperature in small-particle positive-electrode active materials, and stabilizes the structure of the positive-electrode active material. As a result, the present disclosure can effectively improve the high-rate discharge performance, low-temperature discharge performance, and high temperature performance of the current lithium-ion batteries, and meet the high-rate discharge and low-temperature discharge requirements for lithium-ion batteries.

### DETAILED DESCRIPTION OF THE EMBODIMENTS

In order to make the technical solutions and advantages of the present disclosure clear, the present disclosure and beneficial effects thereof will be further described in detail below, but the embodiments of the present disclosure are not limited thereto.

The term "Dv90" means that a volume of particles with a particle size less than or equal to a corresponding value is 90% of a volume of total particles.

Currently, the common positive-electrode active materials have a particle size Dv90 generally of 15 µm to 40 µm, and each are a mixture of small and large particles. Materials with different particle sizes have varying compacted densities and electron conduction properties, resulting in significant differences in electrochemical performance of a lithium-ion battery prepared accordingly. When a positive-electrode active material with large and small mixed particles is adopted, small particles can fill gaps among large particles, making it easy to achieve a relatively large compacted density. In an allowable compacting range of a material, the greater the compacted density of an electrode sheet, the higher the capacity of a battery. However, as the market demands for lithium-ion batteries continue to increase, the common positive-electrode active materials can no longer meet the requirements for high-rate discharge performance and low-temperature discharge performance. Even when an appropriate electrolyte, positive-electrode material, etc. is selected based on these positive-electrode active materials, the improvement for high-rate discharge performance and low-temperature performance of lithium-ion batteries is still very limited. If a positive-electrode active material predominated by small particles, such as Dv90 of less than 11 µm, there is a short transport path of lithium ions in positive-electrode particles, and the superior rate and low-temperature performance can be achieved. However, due to the strong interaction among small particles, it is difficult for particles to flow and be rearranged. Positive-electrode active materials produced accordingly often exhibit characteristics such as high porosity, large specific surface area, and small compacted density, and thus are extremely unstable at high temperatures, resulting in significant potential safety hazards. Therefore, positive-electrode active materials predominated by small particles are basically not adopted at present.

Based on this, a first aspect of the present disclosure is intended to provide a lithium-ion battery, comprising a shell, and a cell and an electrolyte that are arranged inside the shell. The cell comprises a positive electrode, a negative electrode, and a separator arranged between the positive electrode and the negative electrode. The positive electrode comprises a positive-electrode active layer, and the positive-electrode active layer comprises a positive-electrode active material with Dv90 of 9.5±1.5 µm. The electrolyte comprises an electrolyte additive, and the electrolyte additive comprises a tricarbonitrile compound and a tetracarbonitrile compound.

In the present disclosure, a positive-electrode active material predominated by small particles is specifically designed and used in combination with an electrolyte comprising a tricarbonitrile compound and a tetracarbonitrile compound, which overcomes the contradiction between high-temperature performance and rate performance or low-temperature performance of a small-particle positive electrode. This electrolyte can effectively improve the poor high-temperature performance caused by a small-particle material while maintaining the superior high-rate discharge performance and low-temperature discharge performance for a battery.

In some embodiments, a weight of the positive-electrode active material is a, a total weight of the tricarbonitrile compound and the tetracarbonitrile compound is b, and a and b satisfy the following relationship equation: 0.6% ≤ b/a ≤ 1.1%. The inventors have found that, under the premise of meeting the above relationship equation, the small-particle positive-electrode active material exhibits high compatibility with the tricarbonitrile compound and the tetracarbonitrile compound, and there are relatively sufficient amounts of the tricarbonitrile compound and the tetracarbonitrile compound to jointly improve the high-temperature stability of the small-particle material. Thus, while the high-temperature performance is guaranteed, the high-rate discharge performance and low-temperature discharge performance can be enhanced.

Specifically, a and b can satisfy the following relationship equation: 0.6% ≤ b/a < 0.7%, 0.7% ≤ b/a < 0.8%, 0.8% ≤ b/a < 0.9%, 0.9% ≤ b/a < 1.0%, or 1.0% ≤ b/a ≤ 1.1%.,

According to the different specific sizes and capacities of batteries, a has different values. Based on the value of a, the value of b is adjusted on the basis of satisfying the above range.

In some embodiments, the tricarbonitrile compound is at least one selected from the group consisting of HTCN, 1,2,3-propanetricarbonitrile, 1,2,3-tris(2-cyanoethoxy)propane, 1,3,5-benzenetricarbonitrile, 1,3,5-cyclohexanetricarbonitrile, and 2,4,6-trifluorobenzene-1,3,5-tricarbonitrile.

In some embodiments, a mass percentage of the tricarbonitrile compound in the electrolyte is 0.01% to 3.00%. Specifically, the mass percentage of the tricarbonitrile compound in the electrolyte is 0.01% to 0.1%, 0.1% to 1%, 1% to 1.5%, 1.5% to 2%, 2% to 2.5%, or 2.5% to 3%. When the mass percentage of the tricarbonitrile compound is set in the above range, a content of the tricarbonitrile compound allows high adaptability to the tetracarbonitrile compound and the positive-electrode active material, and the lithium-ion battery overall exhibits excellent high-rate, low-temperature, and high-temperature performance. If the mass percentage of the tricarbonitrile compound in the electrolyte exceeds 3.00%, the dynamic performance of the electrolyte will deteriorate sharply, and the high-rate performance and the low-temperature performance both will decline.

In some embodiments, the tetracarbonitrile compound has at least one structural formula selected from the group consisting of the following structural formulas I to III: 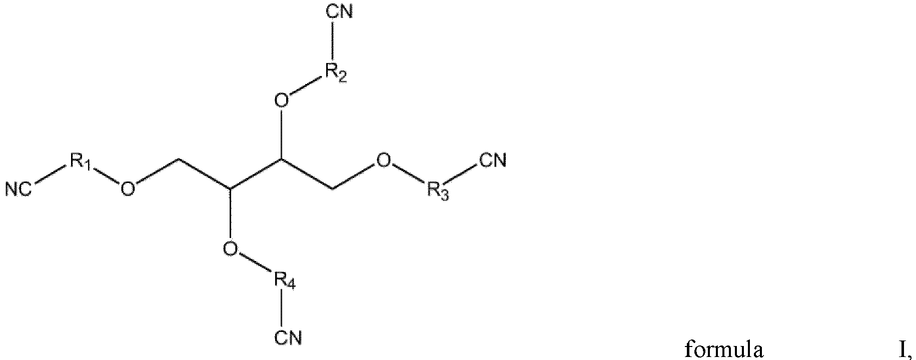 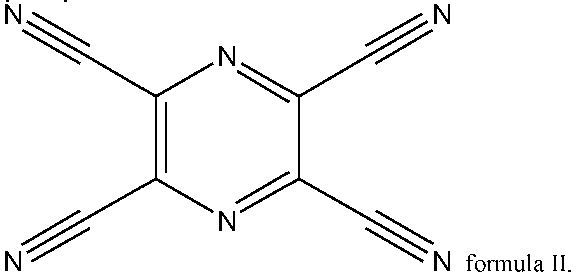 and 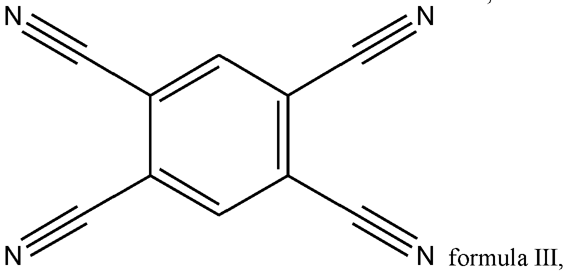 wherein R₁, R₂, R₃, and R₄ each are independently selected from the group consisting of alkyl groups with 1 to 4 carbon atoms.

Specifically, the structural formula I is at least one selected from the group consisting of the following structural formulas: 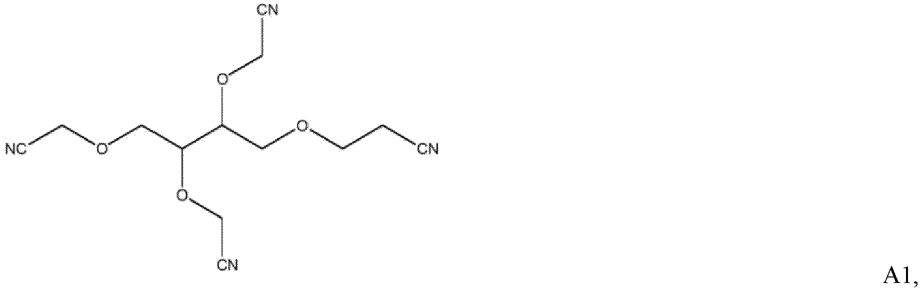 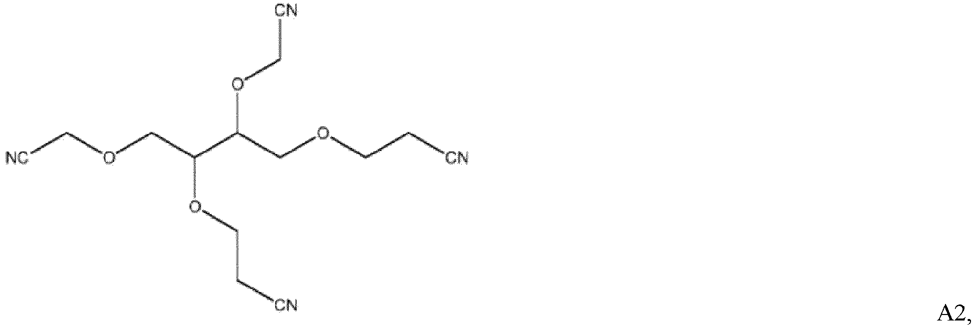 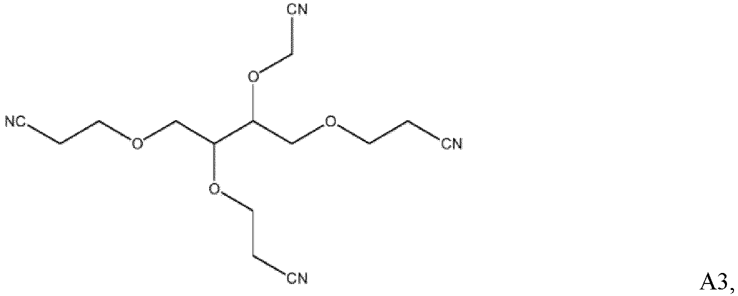 and

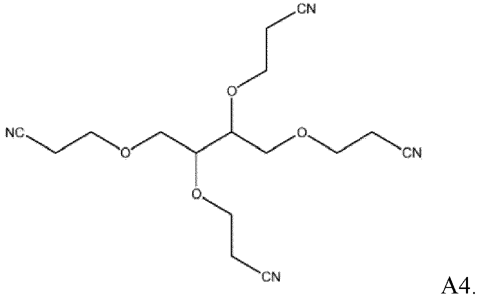

In some embodiments, a mass percentage of the tetracarbonitrile compound in the electrolyte is 0.01% to 2.00%. Specifically, the mass percentage of the tetracarbonitrile compound in the electrolyte is 0.01% to 0.1%, 0.1% to 1%, 1% to 1.5%, or 1.5% to 2%. Similarly, when the mass percentage of the tricarbonitrile compound is set in the above range, the mass percentage of the tetracarbonitrile compound is further adjusted to 0.01% to 2.00%, such that a content of the tetracarbonitrile compound allows high adaptability to the tricarbonitrile compound and the positive-electrode active material, and the lithium-ion battery exhibits excellent high-rate, low-temperature, and high-temperature performance overall. If the mass percentage of the tetracarbonitrile compound in the electrolyte exceeds 2.00%, the dynamic performance of the electrolyte will deteriorate sharply, and the high-rate performance and the low-temperature performance both will decline.

Preferably, a total mass percentage of the tricarbonitrile compound and the tetracarbonitrile compound in the electrolyte is 0.5% to 3.5%. The inventors have found that, when the total mass percentage of the two carbonitrile compounds is controlled in the above range, the dissolution of transition metals at a positive electrode due to the insufficient total amount of the two carbonitrile compounds can be effectively prevented, and the deterioration in high-rate performance and low-temperature performance caused by the excessive total amount of the two carbonitrile compounds can also be avoided. More preferably, the total mass percentage of the tricarbonitrile compound and the tetracarbonitrile compound in the electrolyte is 3%. In this case, the lithium-ion battery has a high-temperature thickness swelling rate of less than or equal to 10%, which effectively improves the high-temperature performance of the battery while maintaining the excellent high-rate performance and low-temperature performance.

The tricarbonitrile compound or the tetracarbonitrile compound provided by the present disclosure comprises more cyano groups and exhibits a stronger complexing ability with transition metals at a positive electrode than the existing dicarbonitrile compounds. Further, in the present disclosure, the tricarbonitrile compound and the tetracarbonitrile compound with the above structures are used in combination. Compared with the use of either the tricarbonitrile compound or the tetracarbonitrile compound alone, the combined use of the tricarbonitrile compound and the tetracarbonitrile compound enables a strong complexing ability with transition metals at a positive electrode, effectively prevents the dissolution of transition metals at a positive electrode, stabilizes the structure of a positive electrode, and is particularly advantageous in improving the high-temperature performance of a small-particle positive-electrode material system.

The tricarbonitrile compound and the tetracarbonitrile compound of the present disclosure can well adapt to the use of the small-particle positive-electrode active material, thereby improving the high-temperature performance while maintaining the prominent high-rate performance and low-temperature performance. When used together with the conventional positive-electrode active materials, such as materials with Dv90 of more than 25 µm, the carbonitrile compounds can still complex with transition metal ions at a positive electrode to improve the high-temperature performance. However, in this case, the rate performance and low-temperature performance cannot be improved, and the high-rate performance will be significantly deteriorated. If the small-particle positive-electrode active material is used in combination with other electrolyte additives capable of improving the high-temperature performance, the high-temperature stability of the small-particle positive-electrode active material can be improved to some extent, but the high-rate performance and low-temperature performance of the battery cannot be maintained, resulting in the failure of extensive use.

The preferable tetracarbonitrile compound with the structural formula I in the present disclosure also exhibits a specified flame-retardant effect, and can effectively absorb reactive groups released during the initial combustion, which further reduces the potential high-temperature safety hazards caused by the small-particle positive-electrode active material, and ensures the service safety of this battery system.

In some embodiments, the electrolyte further comprises a lithium salt, and the lithium salt is at least one selected from the group consisting of lithium hexafluorophosphate, lithium difluorophosphate, lithium difluoro(bisoxalato)phosphate, lithium tetrafluoro(oxalato)phosphate, lithium oxalatophosphate, lithium bis(oxalato)borate, LiODFB, lithium tetrafluoroborate, and lithium bis(fluorosulfonyl)imide.

In some embodiments, a mass percentage of the lithium salt in the electrolyte is 0.01% to 20%. Specifically, the mass percentage of the lithium salt in the electrolyte is 0.01% to 0.1%, 0.1% to 1%, 1% to 2%, 2% to 4%, 4% to 6%, 6% to 8%, 8% to 10%, 10% to 12%, 12% to 14%, 14% to 16%, 16% to 18%, or 18% to 20%.

In some embodiments, the electrolyte further comprises an organic solvent, and the organic solvent is at least one selected from the group consisting of EC, PC, DEC, ethyl methyl carbonate, EP, PP, ethyl acetate, ethyl n-butyrate, γ-butyrolactone, dimethoxymethane, diethoxymethane, and propyl butyrate.

In some embodiments, a mass percentage of the organic solvent in the electrolyte is 50% to 98%. Specifically, the mass percentage of the organic solvent in the electrolyte is 50% to 55%, 55% to 60%, 60% to 65%, 65% to 70%, 70% to 75%, 75% to 80%, 80% to 85%, 85% to 90%, 90% to 95%, or 95% to 98%.

In some embodiments, the electrolyte additive further comprises at least one selected from the group consisting of FEC, vinylene carbonate, PS, ethylene sulfate (DTD), methylene methanedisulfonate, propene sultone, citraconic anhydride, and LiODFB. These additives are conventional additives, and can form a solid electrolyte interphase (SEI) film at a negative electrode. When the conventional additive is used in combination in the electrolyte additive, the electrochemical performance of the battery can be further guaranteed.

In some embodiments, a mass percentage of the conventional additive in the electrolyte is 0.01% to 15%. Specifically, the mass percentage of the conventional additive in the electrolyte is 0.01% to 1%, 1% to 3%, 3% to 6%, 6% to 10%, or 10% to 15%.

In some embodiments, the positive electrode further comprises a positive-electrode current collector for supporting the positive-electrode active layer. The positive-electrode current collector is made of various materials suitable for current collectors of positive electrodes of lithium-ion batteries in the art. For example, the positive-electrode current collector may comprise, but is not limited to, a metal foil, and more specifically, the positive-electrode current collector may comprise, but is not limited to, an aluminum foil.

In some embodiments, the negative electrode comprises a negative-electrode current collector and a negative-electrode active material layer coated on at least one surface of the negative-electrode current collector. The negative-electrode active material layer may comprise, but not limited to, one or more selected from the group consisting of graphite, soft carbon, hard carbon, carbon fiber, mesocarbon microbead, a silicon-based material, a tin-based material, lithium titanate, and other metals capable of producing alloys with lithium. The graphite is one or more selected from the group consisting of synthetic graphite, natural graphite, and modified graphite. The silicon-based material is one or more selected from the group consisting of elemental silicon, a silicon oxide, a silicon-carbon composite, and a silicon alloy. The tin-based material is one or more selected from the group consisting of elemental tin, a tin oxide, and a tin alloy. The negative-electrode current collector is typically a structure or component that gathers a current. The negative-electrode current collector is made of various materials suitable for current collectors of negative electrodes of lithium-ion batteries in the art. For example, the negative-electrode current collector may comprise, but is not limited to, a metal foil, and more specifically, the negative-electrode current collector may comprise, but is not limited to, a copper foil.

In some embodiments, the separator may be made of various materials suitable for separators of lithium-ion batteries in the art. For example, these materials may comprise, but is not limited to, one or a combination of two or more selected from the group consisting of polyethylene, polypropylene, polyvinylidene fluoride, aramid, polyethylene terephthalate, polytetrafluoroethylene, polyacrylonitrile, polyimide, polyamide, polyester, and a natural fiber.

In some embodiments, the shell may be made of an aluminum-plastic film.

A second aspect of the present disclosure is intended to provide an electric device comprising the lithium-ion battery described above.

The electric device may be a vehicle, a mobile phone, a portable device, a notebook computer, a ship, spacecraft, an electric toy, an electric tool, etc. The vehicle may be a fuel vehicle, a gas vehicle, or a new energy vehicle, and the new energy vehicle may be a pure electric vehicle, a hybrid vehicle, an extended-range vehicle, etc. The spacecraft comprises a plane, a rocket, an aerospace plane, a spaceship, etc. The electric toy comprises a fixed or mobile electric toy, such as a game console, an electric toy car, an electric toy ship, and an electric toy plane. The electric tool comprises a metal cutting electric tool, a grinding electric tool, an assembly electric tool, and an electric tool for a railway, such as an electric drill, an electric grinding machine, an electric wrench, an electric screwdriver, an electric hammer, an electric impact drill, a concrete vibrator, and an electric planer. Preferably, the lithium-ion battery of the present disclosure is used for electric devices requiring excellent high-rate discharge performance and low-temperature discharge performance.

The present disclosure and beneficial effects thereof will be described in further detail below with reference to specific examples, but the implementations of the present disclosure are not limited thereto.

### Example 1

A lithium-ion battery comprises a shell, and a cell and an electrolyte that are arranged inside the shell. The cell comprises a positive electrode, a negative electrode, and a separator arranged between the positive electrode and the negative electrode. The positive electrode comprises a positive-electrode active layer, and the positive-electrode active layer comprises a positive-electrode active material with Dv90 of 9.5±1.5 µm. The electrolyte comprises an electrolyte additive, and the electrolyte additive comprises a tricarbonitrile compound and a tetracarbonitrile compound.

The tricarbonitrile compound is HTCN. The tetracarbonitrile compound is 1,2,3,4-tetrakis-(2-cyanoethoxy)butane, which is a tetracarbonitrile compound with a A₄ structure.

A preparation method of the lithium-ion battery is as follows:
1) Preparation of a positive electrode: 48.55 kg of 97.1 wt% lithium cobalt oxide (LCO small particles, Dv90: 9.5 µm), 0.35 kg of 0.7 wt% conductive carbon (SP), 0.35 kg of 0.7 wt% carbon nanotubes (CNT), and 0.75 kg of 1.5 wt% polyvinylidene fluoride (PVDF) were dispersed uniformly in an N-methylpyrrolidone (NMP) solvent by a double planetary mixer, then evenly coated on 9 µm aluminum foil by an extrusion coater, then oven-dried, rolled, and cut to produce the positive electrode.
2) Preparation of a negative electrode: 29.31 kg of 97.7 wt% graphite (GR), 0.33 kg of 1.2 wt% styrene-butadiene copolymer (SBR), and 0.36 kg of 1.1 wt% sodium carboxymethyl cellulose (CMC) were dispersed uniformly in deionized water by a double planetary mixer, then evenly coated on a 5 µm copper foil by an extrusion coater, then oven-dried, rolled, and cut to produce the negative electrode.
3) Preparation of an electrolyte: In a glove box filled with argon, ethylene carbonate (EC), propylene carbonate (PC), diethyl carbonate (DEC), ethyl propionate (EP), and propyl propionate (PP) were added in a ratio of 20:20:20:10:30 to a PP bottle, thoroughly stirred, sealed, and fully cooled in a refrigerator at a temperature lower than 10°C to produce a mixed solvent. 1.1 mol of lithium hexafluorophosphate (LiPF₆) in total was added in batches to the mixed solvent, and stirring was conducted for complete dissolution to produce a basic electrolyte. Then, 0.5 wt% of the tetracarbonitrile compound with a A4 structure, 0.5 wt% of 1,3,6-hexanetricarbonitrile, 4 wt% of 1,3-propanesultone, 8 wt% of FEC, 0.5 wt% of LiODFB, and 0.5 wt% of DTD were added, and thorough shaking was conducted until all additives were fully dissolved to produce the electrolyte in Example 1. 100 g of the electrolyte was finally produced in total.
4) The positive electrode, the negative electrode, and the separator were processed on a winding machine through steps such as tab welding, adhesive application, winding, cutting, and hot pressing to produce a bare cell. An aluminum-plastic film with an appropriate size was taken and stamped, and the bare cell was encapsulated in a stamped aluminum-plastic film. The encapsulated cell was injected with the electrolyte in Example 1, pre-sealed, then allowed to stand at a high temperature and room temperature for a specified period of time, and subjected to hot-press formation, then gas pocket removal, secondary sealing, and capacity grading to produce the lithium-ion battery in this example. The lithium-ion battery meets the following relationship equation: 0.6% ≤ b/a ≤ 1. 1%, wherein a is a weight of a positive-electrode active material, and b is a total weight of a tricarbonitrile compound and a tetracarbonitrile compound. In the lithium-ion battery, the weight of the positive-electrode active material is 19.42 g, and a weight of the electrolyte is 5.25 g.

A content of the tricarbonitrile compound and the tetracarbonitrile compound in the electrolyte was adjusted according to the above composition and lithium cobalt oxide materials with different particle sizes were adopted to produce Examples 2 to 18 and Comparative Examples 1 to 6. Specific compositions were shown in Table 1 below. A content of PC was adjusted to adapt to the adjustment of the content of the tricarbonitrile compound and the tetracarbonitrile compound. Mass percentages of other organic solvents, the lithium salt, and other additives were the same as in Example 1, which would not be repeated here.

**Table 1**

| | Positive-electrode active material (g) | Tricarbonitrile compound (wt%) | Tetracarbonitrile compound (wt%) | Value of b/a |
|---|---|---|---|---|
| Example 1 | Dv90: 9.5µm, 19.42 | HTCN: 0.5 | A4: 0.5 | 0.27% |
| Example 2 | Dv90: 9.5µm, 19.42 | HTCN: 1 | A4: 0.5 | 0.41% |
| Example 3 | Dv90: 9.5µm, 19.42 | HTCN: 2 | A4: 0.5 | 0.68% |
| Example 4 | Dv90: 9.5µm, 19.42 | HTCN: 0.01 | A4: 0.01 | 0.005% |
| Example 5 | Dv90: 9.5µm, 19.42 | HTCN: 0.01 | A4: 1 | 0.27% |
| Example 6 | Dv90: 9.5µm, 19.42 | HTCN: 0.5 | A4: 1 | 0.41% |
| Example 7 | Dv90: 9.5µm, 19.42 | HTCN: 1 | A4: 1 | 0.54% |
| Example 8 | Dv90: 9.5µm, 19.42 | HTCN: 2 | A4: 1 | 0.81% |
| Example 9 | Dv90: 9.5µm, 19.42 | HTCN: 5 | A4: 1 | 1.62% |
| Example 10 | Dv90: 9.5µm, 19.42 | HTCN: 1 | A4: 5 | 1.62% |
| Example 11 | Dv90: 9.5µm, 19.42 | HTCN: 0.5 | A4: 2 | 0.68% |
| Example 12 | Dv90: 9.5µm, 19.42 | HTCN: 1 | A4: 2 | 0.81% |
| Example 13 | Dv90: 9.5µm, 19.42 | HTCN: 2 | A4: 2 | 1.08% |
| Example 14 | Dv90: 9.5µm, 19.42 | HTCN: 2 | Formula II: 1 | 0.81% |
| Example 15 | Dv90: 9.5µm, 19.42 | HTCN: 2 | Formula III: 1 | 0.81% |
| Example 16 | Dv90: 9.5µm, 19.42 | 1,3,5-benzenetricarbonitrile: 2 | A4: 1 | 0.81% |
| Example 17 | Dv90: 9.5µm, 19.42 | 1,3,5-cyclohexanetricarbonitrile: 2 | A4: 1 | 0.81% |
| Example 18 | Dv90: 11µm, 19.42 | HTCN: 2 | A4: 1 | 0.81% |
| Comparative Example 1 | Dv90: 9.5µm, 19.42 | HTCN: 0.5 | / | / |
| Comparative Example 2 | Dv90: 9.5µm, 19.42 | HTCN: 2 | / | / |
| Comparative Example 3 | Dv90: 9.5µm, 19.42 | / | A4: 0.5 | / |
| Comparative Example 4 | Dv90: 9.5µm, 19.42 | / | A4: 2 | / |
| Comparative Example 5 | Dv90: 25µm, 19.42 | HTCN: 0.5 | A4: 0.5 | 0.27% |
| Comparative Example 6 | Dv90: 40µm, 19.42 | HTCN: 0.5 | A4: 0.5 | 0.27% |

The lithium-ion batteries obtained in Examples 1 to 18 and Comparative Examples 1 to 6 each were tested for rate performance, low-temperature performance, and high-temperature performance.

### Performance tests:

1) Rate test (25°C constant-temperature environment): (1) A lithium-ion battery was charged at 0.5 C constant current-constant voltage to 4.45 V with a cut-off rate of 0.02 C. (2) The lithium-ion battery was allowed to rest for 10 min. (3) The lithium-ion battery was discharged at 0.2 C to 3.0 V. (4) The lithium-ion battery was allowed to rest for 10 min. (5) The steps (1) and (2) were repeated, and then discharged at 3 C. The (3 C discharge capacity) ÷ (0.2 C discharge capacity) was calculated.
2) Low-temperature discharge performance test: (1) In a 25°C constant-temperature environment, a lithium-ion battery was charged at 0.5 C constant current-constant voltage to 4.45 V with a cut-off rate of 0.02 C. (2) The lithium-ion battery was allowed to rest for 10 min. (3) The lithium-ion battery was discharged at 0.2 C to 3.0 V. (4) The lithium-ion battery was allowed to rest for 10 min. (5) The lithium-ion battery was charged at 0.5 C constant current-constant voltage to 4.45 V with a cut-off rate of 0.02 C. (6) The lithium-ion battery was allowed to rest in a -20°C constant-temperature environment for 120 min, and then discharged at 0.2 C to 3.0 V. The (-20°C discharge capacity) ÷ (25°C discharge capacity) was calculated.
3) High-temperature storage performance test: (1) In a 25°C constant-temperature environment, a lithium-ion battery was charged at 0.5 C constant current-constant voltage to 4.45 V with a cut-off rate of 0.02 C. (2) The lithium-ion battery was allowed to rest for 10 min. (3) The lithium-ion battery was discharged at 0.2 C to 3.0 V. (4) The lithium-ion battery was allowed to rest for 10 min. (5) The lithium-ion battery was charged at 0.5 C constant current-constant voltage to 4.45 V with a cut-off rate of 0.02 C. A cell thickness was then measured. (6) The lithium-ion battery was allowed to rest in a 85°C blast drying oven for 24 h. A cell thickness was then measured. The (24 h storage thickness - initial thickness) ÷ (initial thickness) was calculated.

Test results were shown in Table 2 below.

**Table 2**

| | 3C discharge/% | -20°C discharge/% | 85°C 24 h/% |
|---|---|---|---|
| Example 1 | 65.26 | 36.81 | 25.5 |
| Example 2 | 64.64 | 36.42 | 22.3 |
| Example 3 | 64.2 | 36.16 | 16.2 |
| Example 4 | 68.53 | 39.52 | 32.19 |
| Example 5 | 63.22 | 35.34 | 24.6 |
| Example 6 | 62.71 | 34.66 | 21.4 |
| Example 7 | 62.46 | 33.98 | 15.2 |
| Example 8 | 61.83 | 33.53 | 8.7 |
| Example 9 | 55.23 | 26.81 | 3.2 |
| Example 10 | 54.46 | 26.06 | 3.1 |
| Example 11 | 61.35 | 32.16 | 13.6 |
| Example 12 | 60.08 | 31.71 | 6.9 |
| Example 13 | 58.64 | 30.93 | 5.1 |
| Example 14 | 60.45 | 32.14 | 9.6 |
| Example 15 | 60.23 | 32.45 | 10.2 |
| Example 16 | 60.55 | 32.11 | 9.5 |
| Example 17 | 60.17 | 32.67 | 9.9 |
| Example 18 | 52.94 | 25.26 | 5.2 |
| Comparative Example 1 | 65.3 | 37.02 | 32.6 |
| Comparative Example 2 | 64.13 | 35.22 | 28.2 |
| Comparative Example 3 | 65.86 | 37.03 | 30 |
| Comparative Example 4 | 64.3 | 34.52 | 25.2 |
| Comparative Example 5 | 50.81 | 24.64 | 8.2 |
| Comparative Example 6 | 48.13 | 22.07 | 3.3 |

Those skilled in the art should understand that, during the cell performance design, the safety performance is the primary consideration, and has a higher priority than other electrical properties. The "85°C 24 h/%" in the table represents a thickness swelling rate during high-temperature storage. When the thickness swelling rate is high, a large amount of a gas is produced by a cell at a high temperature, and the safety performance is poor. When the thickness swelling rate is low, a small amount of a gas is produced by a cell at a high temperature, and the safety performance is prominent. According to industry requirements, when the "85°C 24 h/%" does not exceed 10%, the safety performance of a cell can be guaranteed. Under the premise of guaranteeing the safety performance, when the "3C discharge/%" is higher than 58% and the "-20°C discharge/%" is higher than 30%, a cell exhibits excellent electrical performance and can well meet the operating requirements.

According to the comparison of results of Examples 1 to 18 and Comparative Examples 1 to 4, the tricarbonitrile compound and the tetracarbonitrile compound provided by the present disclosure can effectively improve the high-temperature storage performance of a battery. It can also be seen from the comparison of Examples 1 to 18 and Comparative Examples 5 to 6 that the tricarbonitrile compound and the tetracarbonitrile compound provided by the present disclosure are very suitable for small-particle positive-electrode active materials, and a corresponding lithium-ion battery can maintain excellent high-rate performance and low-temperature discharge performance with the high-temperature performance of the small-particle positive-electrode active material system improved.

According to the comparison of Examples 1 to 13, as the content of the tricarbonitrile compound or the tetracarbonitrile compound increases, the improvement in the high-temperature storage performance of a battery is enhanced. However, if the content of the carbonitrile compound is too high, the high-rate performance and low-temperature discharge performance of a battery will be compromised, which goes against the original intention of lithium-ion battery design in the present disclosure. When the tricarbonitrile compound and the tetracarbonitrile compound are added at preferable amounts, and the contents of the tricarbonitrile compound and the tetracarbonitrile compound and the content of the positive-electrode active material satisfy the above relationship equation, a resulting battery exhibits excellent high-rate discharge performance, low-temperature discharge performance, and high-temperature performance, such as Examples 8, 12, and 14 to 17.

In summary, the lithium-ion battery provided by the present disclosure combines a specially-designed positive-electrode active material and an electrolyte additive. When the contents of the positive-electrode active material and the electrolyte additive satisfy the above relationship equation, the high-rate discharge performance, low-temperature discharge performance, and high-temperature performance of the lithium-ion battery can be simultaneously improved.

According to the disclosure and teaching of the above specification, those skilled in the field of the present disclosure may also change and modify the above embodiments. Therefore, the present disclosure is not limited to the above specific embodiments, and any obvious improvements, replacements, or modifications made by those skilled in the art on the basis of the present disclosure should fall within the protection scope of the present disclosure. In addition, although some specific terms are used in the specification, these terms are provided to merely illustrate rather than limit the present disclosure.

## Claims

1. A lithium-ion battery, comprising a shell, and a cell and an electrolyte that are arranged inside the shell, wherein
the cell comprises a positive electrode, a negative electrode, and a separator arranged between the positive electrode and the negative electrode; the positive electrode comprises a positive-electrode active layer, and the positive-electrode active layer comprises a positive-electrode active material with Dv90 of 9.5±1.5 µm; and
the electrolyte comprises an electrolyte additive, and the electrolyte additive comprises a tricarbonitrile compound and a tetracarbonitrile compound.

2. The lithium-ion battery according to claim 1, wherein a weight of the positive-electrode active material is a, a total weight of the tricarbonitrile compound and the tetracarbonitrile compound is b, and a and b satisfy the following relationship equation: 0.6% ≤ b/a ≤ 1.1%.

3. The lithium-ion battery according to claim 2, wherein a total mass percentage of the tricarbonitrile compound and the tetracarbonitrile compound in the electrolyte ranges from 0.5% to 3.5%.

4. The lithium-ion battery according to any one of claims 1 to 3, wherein the tricarbonitrile compound is at least one selected from the group consisting of 1,3,6-hexanetricarbonitrile (HTCN), 1,2,3-propanetricarbonitrile, 1,2,3-tris(2-cyanoethoxy)propane, 1,3,5-benzenetricarbonitrile, 1,3,5-cyclohexanetricarbonitrile, and 2,4,6-trifluorobenzene-1,3,5-tricarbonitrile.

5. The lithium-ion battery according to claim 4, wherein a mass percentage of the tricarbonitrile compound in the electrolyte ranges from 0.01% to 3.00%.

6. The lithium-ion battery according to any one of claims 1 to 3, wherein the tetracarbonitrile compound has at least one structural formula selected from the group consisting of the following structural formulas I to III: 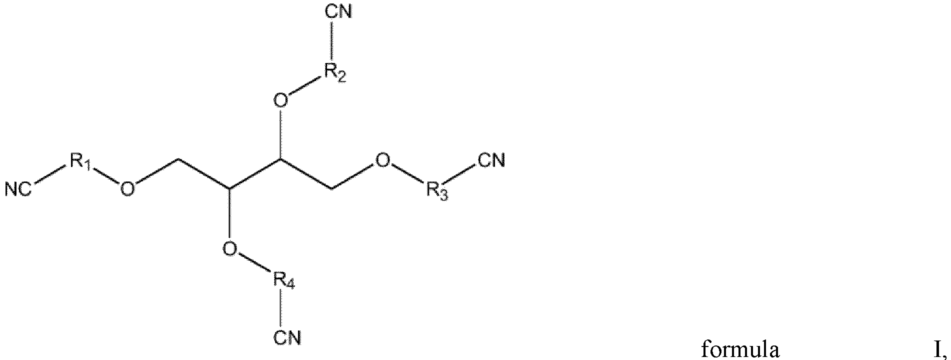 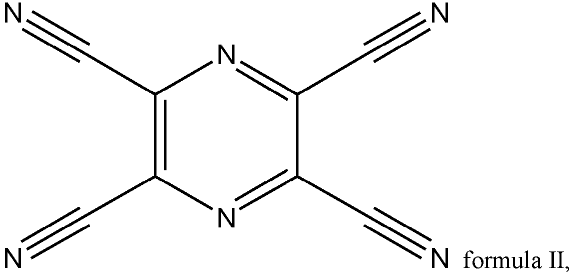 and 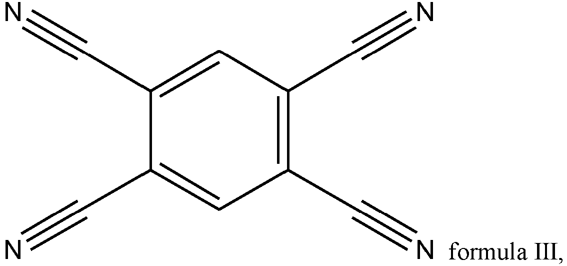 wherein R₁, R₂, R₃, and R₄ each are independently selected from the group consisting of alkyl groups with 1 to 4 carbon atoms.

7. The lithium-ion battery according to claim 6, wherein the structural formula I is at least one selected from the group consisting of the following structural formulas:

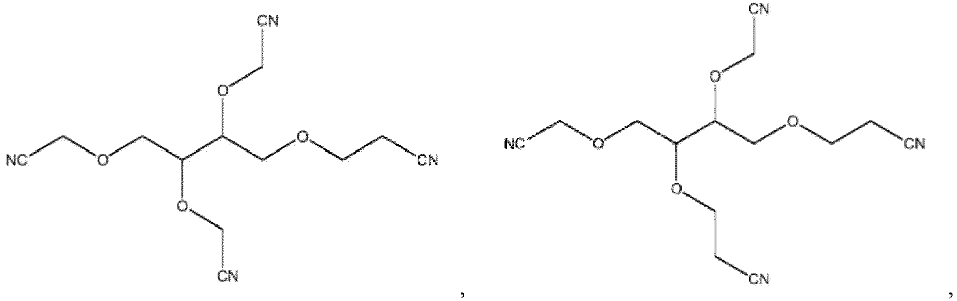

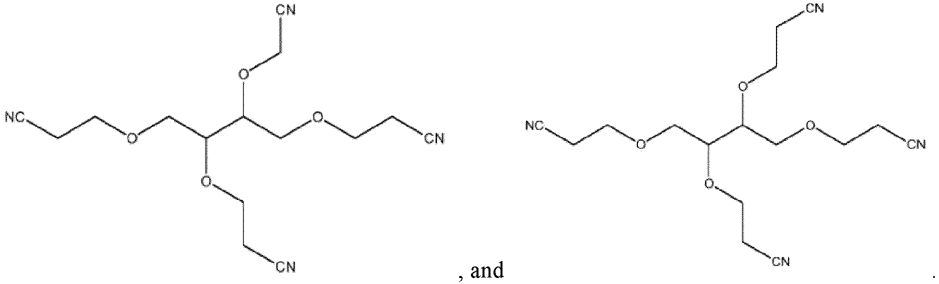

8. The lithium-ion battery according to claim 6, wherein a mass percentage of the tetracarbonitrile compound in the electrolyte ranges from 0.01% to 2.00%.

9. The lithium-ion battery according to claim 1, wherein the electrolyte further comprises a lithium salt and an organic solvent; the lithium salt is at least one selected from the group consisting of lithium hexafluorophosphate, lithium difluorophosphate, lithium difluoro(bisoxalato)phosphate, lithium tetrafluoro(oxalato)phosphate, lithium oxalatophosphate, lithium bis(oxalato)borate, lithium difluoro(oxalato)borate (LiODFB), lithium tetrafluoroborate, and lithium bis(fluorosulfonyl)imide; a mass percentage of the lithium salt in the electrolyte ranges from 0.01% to 20%; the organic solvent is at least one selected from the group consisting of ethylene carbonate (EC), propylene carbonate (PC), diethyl carbonate (DEC), ethyl methyl carbonate, ethyl propionate (EP), propyl propionate (PP), ethyl acetate, ethyl n-butyrate, γ-butyrolactone, dimethoxymethane, diethoxymethane, and propyl butyrate; a mass percentage of the organic solvent in the electrolyte ranges from 50% to 90%; and the electrolyte additive further comprises at least one selected from the group consisting of fluoroethylene carbonate (FEC), vinylene carbonate, 1,3-propanesultone (PS), ethylene sulfate, methylene methanedisulfonate, propene sultone, citraconic anhydride, and LiODFB.

10. An electric device comprising the lithium-ion battery according to any one of claims 1 to 9.
